# EUROPEAN PATENT APPLICATION

(11) **EP 4 270 164 A1**
(43) Date of publication of application: **01.11.2023**
(21) Application number: 21913542.3
(22) Date of filing: 16.11.2021
(51) Int. Cl.: G06F 3/0483

(54) **CONTENT DISPLAY METHOD AND APPARATUS, ELECTRONIC DEVICE, STORAGE MEDIUM**

(30) Priority: 28.12.2020 CN 202011581043
(71) Applicant: GUANGDONG OPPO MOBILE TELECOMMUNICATIONS CORP., LTD., Dongguan, Guangdong 523860 (CN)
(72) Inventor: ZHANG, Sujun, Dongguan, Guangdong 523860 (CN); LU, Jianqiang, Dongguan, Guangdong 523860 (CN); LI, You, Dongguan, Guangdong 523860 (CN); ZHANG, Minghua, Dongguan, Guangdong 523860 (CN)
(74) Representative: Novagraaf Technologies
(86) International application number: PCT/CN2021/130938
(87) International publication number: WO 2022/142799

(57) **Abstract**

Embodiments of the disclosure disclose a method and apparatus for displaying content, an electronic device and a storage medium. It is applied to electronic device including a display screen, the size of the content display area of the display screen is adjustable, the content display area is the visible area in the display area included in the display screen, the method comprises: a first interface content is displayed in the content display area, in response to the increase of the content display area, a second interface content is displayed additionally in the content display area.

## Description

### CROSS-REFERENCE TO RELATED APPLICATION(S)

This application claims the priority to Chinese Patent Application No. 202011581043.5 filed on December 28th, 2020, the entire disclosure of which is incorporated herein by reference.

### TECHNICAL FIELD

The disclosure relates to the technical field of computer technology, and more particularly to a method and apparatus for displaying content, electronic device, and storage medium.

### BACKGROUND

Due to the limitation of hardware conditions, electronic device can only display the content of one interface on one screen, resulting in limited visible information.

### SUMMARY

In view of the above problem, this disclosure provides a method and apparatus for displaying content, electronic device, and storage medium to improve the above problem.

In a first aspect, implementations of the disclosure provide a method for displaying content, for an electronic device which includes a display screen, the size of content display area of the display screen is adjustable, the method comprises: displaying, in the content display area, a first interface content; and displaying, in response to the increase of the content display area, a second interface content additionally in the content display area, the second interface content is an interface content corresponding to the first interface content.

In a second aspect, implementations of the disclosure provide an apparatus for displaying content, for an electronic device which includes a display screen, the size of content display area of the display screen is adjustable, the apparatus comprises: a content display module configured to display a first interface content in the content display area; and a content display control module configured to display a second interface content additionally in the content display area, in response to the increase of the content display area, the second interface content is an interface content corresponding to the first interface content.

In a third aspect, implementations of the disclosure provide an electronic device comprises a processor and a memory, one or more programs being stored in the memory and configured to be executed by the processor to implement the above method.

In a fourth aspect, implementations of the disclosure provide a computer-readable storage medium, the computer-readable storage medium stores computer programs code, the above method being implemented when the computer programs code being run by processor.

### BRIEF DESCRIPTION OF DRAWINGS

To explain the technical solutions in the embodiments of the disclosure more clearly, the drawings needed in the description of the embodiments are briefly introduced in the following. Obviously, the drawings described below are only some embodiments of the disclosure, and other drawings can be obtained according to the drawings without creative work for those skilled in the field.
FIG. 1 shows a schematic diagram of an electronic device in an embodiment of the disclosure from a normal form to an intermediate expanded form;
FIG. 2 shows a schematic diagram of an electronic device in an embodiment of the disclosure from an intermediate expanded form to a fully expanded form;
FIG. 3 shows a schematic flowchart of a method for displaying content provided in embodiments of the disclosure.
FIG. 4 shows a schematic diagram of a first interface content and a second interface content provided in embodiments of the disclosure.
FIG. 5 shows another schematic diagram of a first interface content and a second interface content provided in embodiments of the disclosure.
FIG. 6 shows other schematic diagram of a first interface content and a second interface content provided in embodiments of the disclosure.
FIG. 7 shows a schematic diagram of an interface of information prompting in embodiments of the disclosure.
FIG. 8 shows another schematic flowchart of a method for displaying content provided in embodiments of the disclosure.
FIG. 9 shows a schematic diagram of displaying a second interface content additionally in the content display area in embodiments of the disclosure;
FIG. 10 shows a schematic diagram of canceling the display of the second interface content in the content display area in embodiments of the disclosure;
FIG. 11 shows another schematic diagram of displaying a second interface content in the content display area in embodiments of the disclosure;
FIG. 12 shows a schematic diagram of a second interface content moving with the movement of the display screen in embodiments of the disclosure;
FIG. 13 shows a schematic diagram of replacing a first interface content in embodiments of the disclosure;
FIG. 14 shows other schematic flowchart of a method for displaying content provided in embodiments of the disclosure;
FIG. 15 shows a structural block diagram of an apparatus for displaying content in embodiments of the disclosure;
FIG. 16 shows a structural block diagram of an electronic device used to perform the method for displaying content according to the embodiments of the disclosure;
FIG. 17 shows a storage unit used to save or carry program code for implementing a method for displaying content according to the embodiments of the disclosure.

### DETAILED DESCRIPTION

In the following, the technical solutions in the embodiments of the disclosure will be clearly and completely described in combination with the drawings in the embodiments of the disclosure. Obviously, the embodiments described is only a part of the embodiments of the disclosure, but not all embodiments. Based on the embodiments in this disclosure, all the other embodiments obtained by ordinary technicians in this field without performing creative work shall fall within the scope of protection in this application.

In electronic device, visual interface content is usually configured to display text or image content to the user. In addition, some interface contents can also be used to facilitate user to control electronic device. For example, in the video interface of electronic device, electronic device can play video content. For another example, in the setting interface of electronic device, user can set the electronic device through the setting interface.

However, after studying the display mode of the interface of the electronic device, the inventor found that due to the limitation of the hardware conditions, the electronic device can only display the content of one interface on one screen, resulting in limited visible information. Moreover, if the user triggers to enter a new level of interface, the new level of the interface will overwrite the previous level of the interface, and sometimes because of this situation, it will cause inconvenience to the user, resulting in poor flexibility on displaying of the interface.

Therefore, the inventor provides a method of displaying content and apparatus, electronic device, storage medium in this disclosure that can improve the above problems. In the case that the size of content display area of display screen is adjustable and the content display area is a visible area in the display area included in the display screen, when a first interface content is displayed in the content display area, in response to the increase of the content display area, a second interface content corresponding to the first interface content is displayed additionally in the content display area.

Through the above method, after the first interface content has been displayed, if the content display area is increased, the second interface content can be displayed in the content display area with the increase of the content display area, so that the first interface content and the second interface content corresponding to the first interface content can be displayed in the content display area at the same time. As a result, the flexibility of interface displaying is improved, and the user experience is improved.

In an embodiment, the method provided in this embodiment may also include the following process: in response to a first operation, the content display area is increased, the first operation is used to instruct the electronic device to control the display screen to increase the content display area.

In an embodiment, the first operation is a specified operation acting on physical control of the electronic device.

In an embodiment, the first operation is a touch operation acting on a first virtual button of the electronic device.

In an embodiment, the method provided in this embodiment may also include the following process: in the process of increasing the content display area, the first interface content is moved along a first direction, and the second interface content is gradually presented along the first direction from a first side of the electronic device, and the first side of the electronic device is a side opposite to the first direction.

In an embodiment, the position of the second interface content remains constant with respect to a first side of the electronic device.

In an embodiment, the method provided in this embodiment may also include the following process: in the process of increasing the content display area, the second interface content is moved along a second direction, and the second interface content is gradually presented along the second direction starting from a first side of the first interface content, and the first side of the first interface content is a side corresponding to the second direction.

In an embodiment, the position of the first interface content remains constant with respect to a second side of the electronic device.

In an embodiment, the method provided in this embodiment may also include the following process: if an operation of increasing the content display area is detected, and the first interface content is an interface content at the later level, the content display area is increased, and the second interface content is displayed in the content display area.

In an embodiment, the method provided in this embodiment may also include the following process: if an operation of increasing the content display area is detected, and the first interface content is a first-level interface content, the content display area is increased, and a specified content is displayed in the content display area.

In an embodiment, the method provided in this embodiment may also include the following process: if a selection operation acting on the second interface content is detected, a target interface content option in the second interface content is obtained, the target interface content option is an interface content option which the selection operation acting on; and the first interface content is replaced with the interface content corresponding to the target interface content option.

In an embodiment, the method provided in this embodiment may also include the following process: in response to the reduction of the content display area, the content display area is reduced, and the display of the second interface content in the content display area is cancelled.

In an embodiment, the method provided in this embodiment may also include the following process: in response to the reduction of the content display area, the content display area is reduced, and in the process of reducing the content display area, the position of the second interface content remains constant with respect to the first side of the electronic device, and the first interface content is moved along a second direction to stack on the second interface content, so that the second interface content is invisible.

In an embodiment, the method provided in this embodiment may also include the following process: based on the extent of expansion of the content display area, the display position of the second interface content is controlled to move to the first side, so that the position of the second interface content remains constant relative to the first side of the electronic device.

In an embodiment, the method provided in this embodiment may also include the following process: if the operation of increasing the content display area is detected, whether the interface expansion display function is enabled or not is detected. If the interface expansion display function is enabled, the content display area is increased, and the second interface content is displayed additionally in the content display area, the second interface content is an interface content corresponding to the first interface content; If the interface extension display function is not enabled, the content display area is increased and the size of the first interface content is enlarged.

In an embodiment, the method provided in this embodiment may also include the following process: if the interface expansion display function is enabled, in response to an operation used to reduce the content display area, the content display area is reduced, and the display of the second interface content is canceled in the content display area. If the interface expansion display function is not enabled, in response to an operation used to reduce the content display area, the content display area is reduced and the size of the first interface content is restored.

In an embodiment, the second interface content is an interface content in the previous level corresponding to the first interface content.

It should be illustrated that in the embodiments, electronic device may have various forms. Optionally, electronic device may include normal form, intermediate expanded form, and fully expanded form.

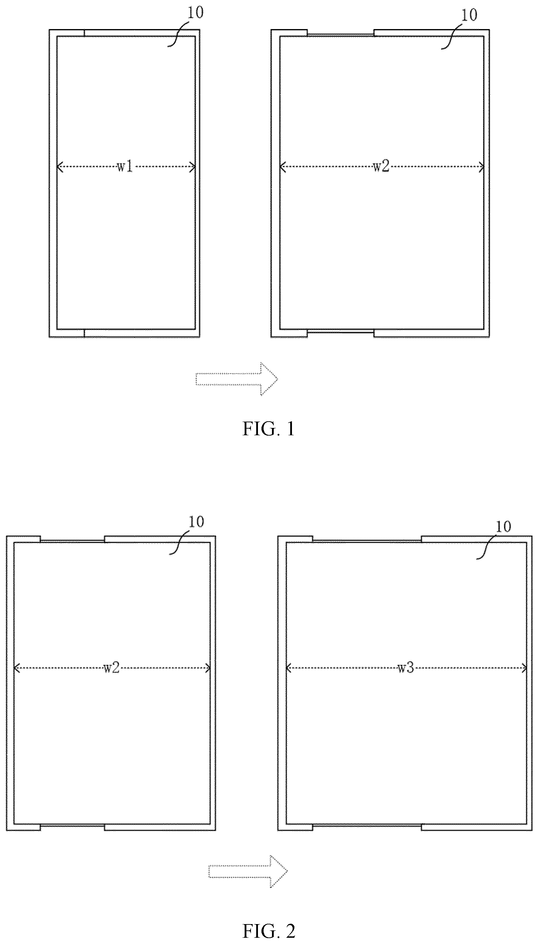

The left image in FIG. 1 shows the style of the electronic device when it is in its normal form. In the normal form, part of the display area of the display screen 10 is visible, while another part of the display area is hidden in the hidden part of the electronic device. The hidden part can be the inside of the electronic device or the back of the electronic device. And the size of the visible area in the display area of display screen 10 is the smallest in the normal form condition.

The part of width w1 in FIG. 1 is the range corresponding to the area visible in display screen 10. When the electronic device expands the visible area, the display screen 10 can move toward the direction indicated by the arrow in FIG. 1, so that the display area originally hidden in the hidden part of the electronic device gradually becomes visible. It is understandable that a hidden region is transformed into a visible region after being exposed and in a visible state. For example, as shown in the right image in FIG. 1, with the movement of display screen 10, the width of the originally visible area of display screen 10 increases from w1 to w2, then the display area with the increased width of w2-w1 is the display area that changes from hidden state to visible state.

In the case that there are still hidden parts in the display area in display screen 10, the form of the electronic device can be understood as the intermediate expanded form. As shown in FIG. 2, with the continuous movement of display screen 10, it can finally be displayed in the fully expanded form as shown in the right image in FIG. 2. In the fully expanded form, the part of display screen 10 originally hidden in the hidden part of the electronic device can be fully exposed, and then the width of the visible area in the display area of display screen 10 can be increased to w3. Moreover, the size of the visible area in the display area of display screen 10 is the largest in the fully expanded form.

It should be illustrated that in the process of conversion of electronic devices from normal form to fully expanded form in embodiments of this disclosure, in addition to the direction shown by arrows in FIG. 1 and FIG. 2, it can also be converted from normal form to fully expanded form in the direction opposite to the direction shown by arrows in FIG. 1 and FIG. 2. In the embodiments of this disclosure, the direction indicated by the arrows in FIG. 1 and FIG. 2 can be taken as the first direction, and the direction opposite to the first direction can be taken as the second direction.

It should be illustrated that, based on the foregoing, the display screen in the embodiments can be moved (for example, extended or retracted) with the rotation of the shaft arranged at one end of the electronic device, so as to make part of the display area of the display screen hidden or make the hidden area changed into a visible area. Optionally, the display screen can be flexible screen so that the display screen can be extended or retracted with the rotation of the axis.

And the content display area mentioned in the content of the subsequent embodiments may be the visible area as shown in FIG. 1 and FIG. 2.

The embodiments of this disclosure will be described in detail in combination with the drawings below.

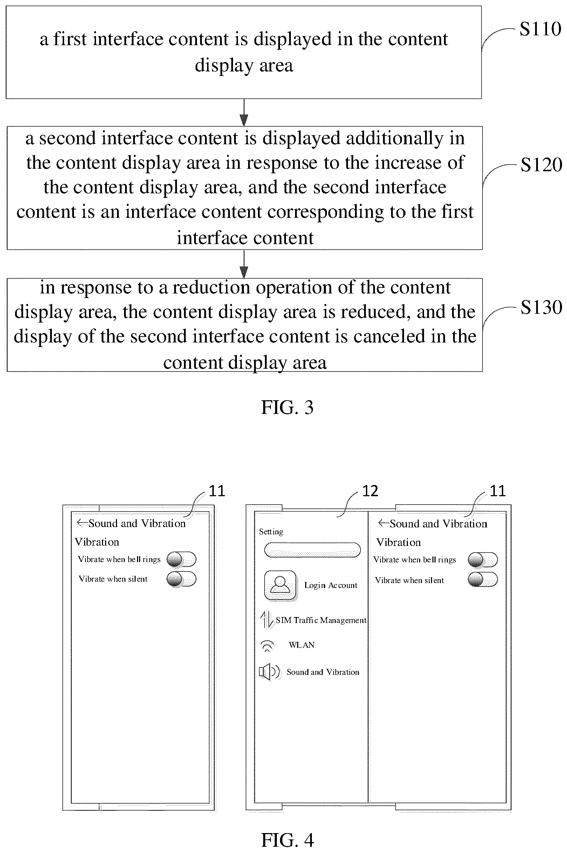

Refer to FIG. 3, a method for displaying content provided by the embodiment of this disclosure, applied to an electronic device including a display screen, the size of the content display area of the display screen is adjustable, and the content display area is the visible area in the display area included in the display screen, and the method includes:

S110, a first interface content is displayed in the content display area.

Therein the first interface content can be a variety of interface content, and the content of the first interface content is different in different display scenes.

As an embodiment, the first interface content can be video playback content. Optionally, if the electronic device runs a video playback program and detects that a video content is selected, it will trigger the display of the video playback interface. Correspondingly, the electronic device can start playing the selected video content in the content display area of the display screen, and the video content that starts playing in the content display area of the display screen can be understood as the first interface content.

As another embodiment, the first interface content can be the content of the setting interface. Optionally, if the electronic device detects a touch command to enter the setting interface, the electronic device can display the content of the setting interface in the content display area. Therein, when the electronic device detects the touch command to enter the setting interface, it can display the content of the corresponding setting interface according to the content of the command. For example, if the electronic device detects the touch command to enter the setting interface, and the content of the touch command is to enter the first-level setting interface, the electronic device will display the content of the first-level setting interface in the content display area, and the corresponding content of the first-level setting interface is the first interface content currently. If the electronic device detects the touch command to enter the setting interface and the content of the touch command is to enter the specified second-level setting interface, the electronic device will display the content of the specified second-level setting interface in the content display area, and the content of the corresponding second-level setting interface is the first interface content currently.

As another embodiment, the first interface content can be the content of the game interface. Optionally, if the electronic device detects the instruction to start the specified game application during operation, it will display the interface content of the specified game application in the content display area, and the interface content of the specified game application displayed is the first interface content currently.

Therein, it should be illustrated that 5110 can be executed when the electronic device is in the normal form shown in FIG. 1, or when the electronic device is in the intermediate expanded form shown in the right image in FIG. 1.

S120, a second interface content is displayed additionally in the content display area in response to the increase of the content display area, and the second interface content is an interface content corresponding to the first interface content.

Therein, when the hidden area in the display screen of the electronic device is not fully exposed to the electronic device, it means that the electronic device can increase the content display area. In this embodiment, the content display area can be increased in response to a first operation, which is used to instruct the electronic device to control the display screen to increase the content display area.

In the embodiments of the present disclosure, the first operation may be implemented in a variety of ways.

As a way, the operation of increasing the content display area can be triggered by the specified operation on the physical control of the electronic device. In this way, the specified operation on the physical control of the electronic device is the first operation. Correspondingly, in this way, if the electronic device detects a specified operation acting on the physical control, it determines the operation of increasing the content display area is detected.

Optionally, the physical control can be a power button and the specified operation can be a sliding operation along a first specified direction. Optionally the physical control can be a button to increase volume, and the specified operation can be a press operation with a press duration greater than the duration threshold. It should be illustrated that the aforementioned power button and button to increase volume are only exemplary, and in the embodiments of this disclosure, any physical control included in the electronic device may be used as a button configured to trigger an operation that increases the content display area.

As another way, the operation of increasing the content display area can be triggered by a touch operation on a first specified virtual button of the electronic device. Correspondingly, in this way, if a touch operation acting on the first specified virtual button is detected, the first operation is determined to be detected. Optionally, the first specified virtual button can be configured in the shortcut bar. Optionally, the first specified virtual button can be configured on the desktop.

Then after the electronic device detects the operation of increasing the content display area, the content display area can be increased, so that the second interface content corresponding to the first interface content can be displayed additionally in the increased content display area. Therein, displaying the second interface content additionally in the content display area can be understood as displaying the second interface content in the content display area while maintaining the display of the first interface content in the content display area.

As an example, as shown in FIG. 4, the left image of FIG. 4 shows the display state when only the first interface content 11 is displayed in the content display area. In the state as showed in the left image of FIG. 4, if the operation of increasing the content display area is detected, and the second interface content corresponding to the first interface content 11 is the second interface content 12, then the second interface content 12 can be displayed in the enlarged content display area as shown in the right image of FIG. 4.

It should be illustrated that in embodiments, increasing the content display area can be understood as making more hidden areas in the display area of the display screen convert into visible areas, so that the second interface content corresponding to the first interface content can be displayed in the content display area. Therein, the correspondence between interface content can be understood as having a certain correlation with each other, and the ways of this correlation are different in different scenarios.

In an embodiment, the correlation can include association between setting interface of different levels. For example, in the setting interface scenario, the association between setting interface of different levels. For example, refer to FIG. 4 again, as shown in FIG. 4, the first interface content 11 is the content of setting interface of sound and vibration, and the second interface content 12 is the content of the main setting interface. The association of setting interface level between the first interface content 11 and the second interface content 12 is that the second interface content 12 is the interface content at the previous level with respect to the first interface content 11. And the first interface content 11 is the interface content at the later level with respect to the second interface content 12. In this way, the electronic device can display multiple levels of the setting interface in the display screen at the same time, so that users can see the content of the setting interface of different levels at the same time without switching the setting interface.

Optionally, in the embodiment that the correlation can include association between setting interface of different levels, in response to the increase of the content display area, a second interface content is displayed additionally in the content display area, comprising:

if an operation of increasing the content display area is detected, and the first interface content is the interface content at the later level, the content display area is increased, and the second interface content is displayed additionally in the content display area, the second interface content is an interface content corresponding to the first interface content at the previous level. Optionally, if an operation of increasing the content display area is detected, and the first interface content is the first-level interface content, the content display area is increased, and a specified content is displayed additionally in the content display area. The specified content can be a blank content, for example, a white image.

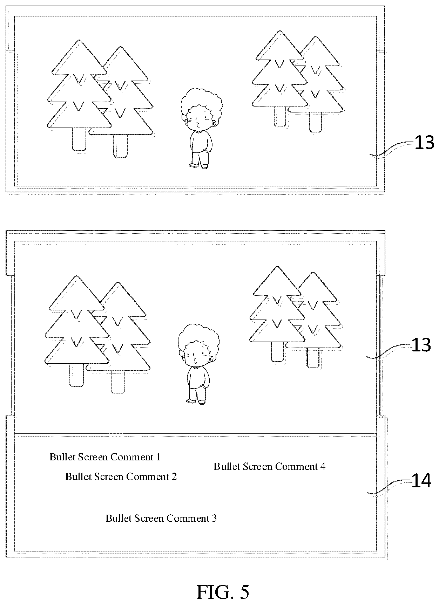

In another embodiment, the correlation can include association among multiple components, for example, the association between multiple components in the scenario of video playback. Exemplary, in the scenario of video playback, it may include a video playback component for performing video content playback and a video playback control component for controlling the progress of video playback, or it may also include a bullet screen component for displaying the bullet screen comments corresponding to video content, and the video playback control component and bullet screen component are associated with the video playback component. As shown in FIG. 5, in the video playing scenario, the first interface content 13 is the video content, and the second interface content corresponding to the first interface content 13 can be the interface content corresponding to the bullet screen component. Then when the electronic device increases the content display area, the interface content (that is second interface content 14) corresponding to the bullet screen component corresponding to the first interface content 13 can be displayed in the content display area. Therefore, in this embodiment, the bullet screen comments can be displayed without covering the video content, thereby avoiding the interference of the bullet screen comments to the video content.

In another embodiment, the correlation can include associations between multiple application programs. For example, in the game scenario, user may also view the content of other applications during the running of the game program, but if the electronic device directly switches to display the interface of the other applications, the interface of the other applications will cover the game interface, thus causing interference to the game operation.

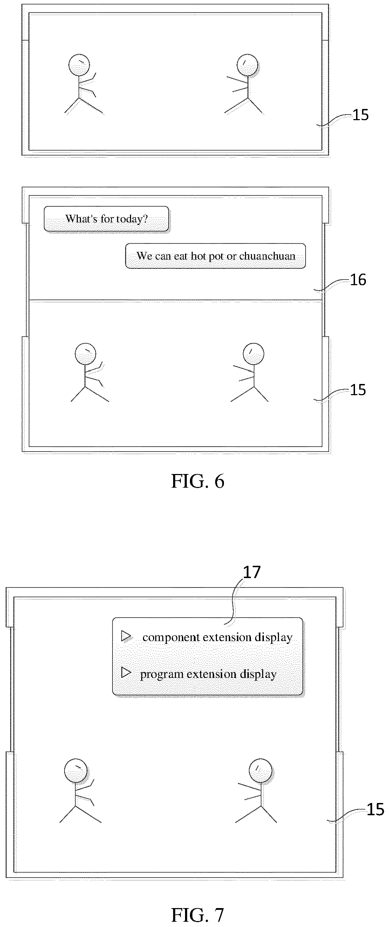

For example, while the electronic device is running a game, after receiving a message, the user may go to view the message, and the electronic device will switch the game interface to the message display interface. In this embodiment, by establishing the association relationship between the game program and the program to which the message display interface belongs, an operation of increasing the content display area can be detected during the running of the game program, and the message display interface can be displayed in the enlarged content display area, so that the user can play the game and view the message at the same time without switching the interface. As an example, as shown in FIG. 6, in the process of the electronic device displaying the first interface content 15(the interface content of two people's fighting shown in FIG. 6), if an operation of increasing the content display area is detected, the content display area is enlarged, and the second interface content 16(the chat interface content shown in FIG. 6) is displayed in the content display area.

As an embodiment, the aforementioned correlation can also be configured by the user.

Optionally, in such an embodiment that the correlation includes association among multiple components, the component corresponding to the interface content which is displayed additionally in the content display area can be configured by the user after the increase of the content display area is detected. In addition to the aforementioned association between the video playback component and the bullet screen component, the user can also choose to configure the association between the video playback control component and the video playback component, as an example. Then, after the association between the video playback control component and the video playback component is built, in the case that the first interface content is the video content played by the video playback component, if the operation of increasing the content display area is detected, the interface content corresponding to the video playback control component will be displayed additionally in the content display area as the second interface content.

Optionally, in such an embodiment that the correlation includes association among multiple application programs, after the operation of increasing the content display area of the display screen is detected, which application program the interface content displayed in the content display area belongs to can be configured by the user. As an example, in electronic device, multiple pairs of related programs can be established in advance to generate program association table. Then, when a program is running, the first interface content is the interface content of the program currently running in the foreground, if the operation of increasing the content display area of the display screen is detected, the program associated with the current program running in the foreground can be obtained by querying the program association table, then the interface content of the program associated with the current program running in the foreground is displayed additionally in the content display area as the second interface content. Exemplary, the program association table includes program A associated with program B, program C associated with program D, and program E associated with program F. In the case that the current program running in the foreground is program C, the first interface content is the interface content corresponding to program C. Then if the operation of increasing the content display area of the display screen is detected, the program D associated with the program C which is the current program running in the foreground can be obtained by querying the program association table. Then, the interface content corresponding to the program D is displayed additionally in the content display area as the second interface content.

It should be illustrated that for some programs, there may be multiple associations of their own. Specifically, the program itself may be associated with other programs, and the multiple components included in the program itself may also be associated with each other. For example, for an application program of a video playback class, the video playback component of the application of the video playback class itself, the video playback control component, and the bullet screen component may have an association relationship. In addition, the video playback class application may also have an association relationship with other applications. In this case, in order to avoid the interference of multiple associations included in the program to the second interface content displayed additionally in the content display area, the electronic device can prompt the user to select the target association from multiple associations when it detects that the program of the first interface content includes multiple associations. Then the second interface content is triggered according to the target association.

As an example, as shown in FIG. 7, in a case that the first interface content 15 is already displayed in the content display area, if an operation of increasing the content display area of the display screen is detected, the association relationship included in the program to which the first interface content 15 belongs can be obtained first. A prompt message interface 17 can be displayed in the content display area if the program to which the first interface content 15 belongs includes associations with other programs and associations among multiple components. The prompt message interface 17 can display the options corresponding to each of the included association, so that the user can choose the second interface content by himself. For example, a component extension display in is shown as option corresponding to associations among multiple components, and program extension display is shown as option corresponding to association with other programs. If the user is detected to select the option of component extension display, the second interface content will be determined based on the correlation among multiple components. If the user is detected to select the option of program extension display, the second interface content will be determined based on the correlation between the program and other programs.

S130, in response to a reduction operation of the content display area, the content display area is reduced, and the display of the second interface content is canceled in the content display area.

In embodiments of this disclosure, reducing the content display area can be understood as gradually hiding the visible area in the display screen to the hidden part of the electronic device, thereby reducing the visible area and increasing the hidden area. In this embodiment, there may be multiple ways to trigger the electronic device to increase the content display area.

As an embodiment, the reduction of the content display area can be triggered by a specified operation acting on the physical control of the electronic device. Correspondingly, in this embodiment, if the electronic device detects a specified operation acting on the physical control, it determines that it has detected an operation that reduces the content display area.

Optionally, the physical button can be the power button, and the specified operation can be a sliding operation along the second specified direction. The second specified direction is different from the aforementioned first specified direction. In addition, the physical button can also be a volume reduction button, and the specified operation can be a press operation with a press duration greater than the duration threshold. It should be illustrated that the aforementioned power button and volume increase button are only exemplary, and in the embodiments of this disclosure, any physical button included in the electronic device can be used as a button configured to trigger an operation to reduce the content display area.

As another embodiment, the reduction of the content display area can be triggered by a touch on the second specified virtual button of the electronic device. Correspondingly, in this embodiment, if a touch operation acting on the second specified virtual button is detected, an operation that reduces the content display area is determined to be detected. Optionally, the second specified virtual button can be configured in the shortcut bar. Optionally, the second specified virtual button can be configured on the desktop.

The method for displaying content provided by the disclosure, in the case that the size of content display area of display screen is adjustable and the content display area is a visible area in the display area included in the display screen, when the first interface content is displayed in the content display area, in response to the increase of the content display area, the second interface content corresponding to the first interface content is displayed additionally in the content display area. Through the above method, after the first interface content has been displayed, if the content display area is increased, the second interface content can be displayed in the content display area with the increase of the content display area, so that the first interface content and the second interface content corresponding to the first interface content can be displayed in the content display area at the same time. As a result, the flexibility of interface displaying is improved, and the user experience is improved.

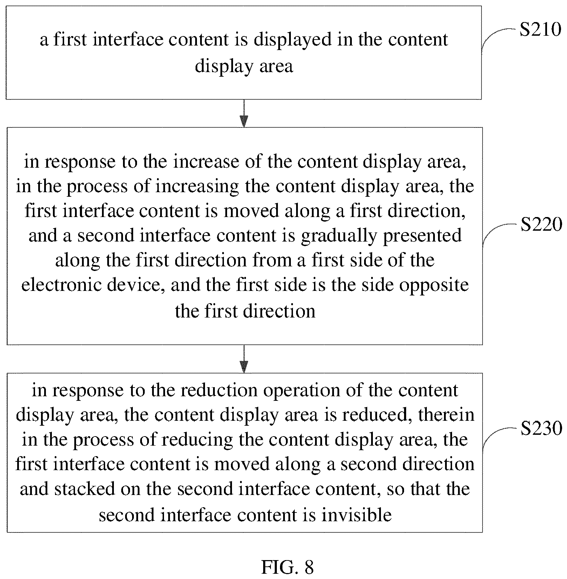

Refer to FIG. 8, a method for displaying content provided by the embodiment of this disclosure, applied to an electronic device including a display screen, the size of the content display area of the display screen is adjustable, and the content display area is the visible area in the display area included in the display screen, and the method comprises:
S210, a first interface content is displayed in the content display area.
S220, in response to the increase of the content display area, in the process of increasing the content display area, the first interface content is moved along a first direction, and a second interface content is gradually presented along the first direction from a first side of the electronic device, and the first side is the side opposite the first direction.

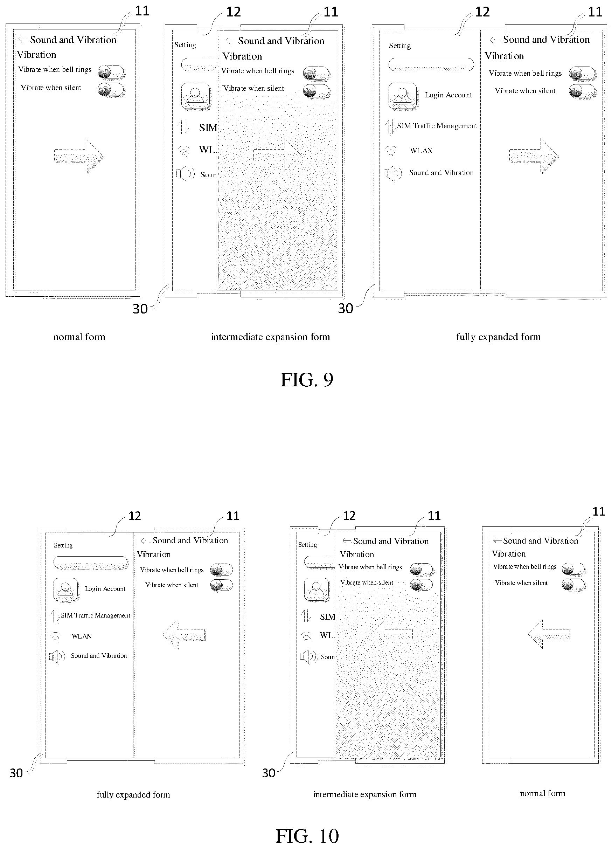

As shown in FIG. 9, in the leftmost image shown in FIG. 9, the display styles of the first interface content 11 and the second interface content 12 in the process of the content display area of the electronic device from a normal form of the electronic device to a fully expanded form are shown. In the normal form, only the first interface content 11 is displayed in the content display area. And, if the operation of increasing the content display area is detected in the normal form, the electronic device will begin to increase the content display area of the display screen, and the determined second interface content 12 can be stacked below the first interface content 11 at the same time. In the process of increasing the content display area, the first interface content 11 will be moved along the first direction at the same time, so that the electronic device will change to an intermediate expansion form shown in the middle image in FIG. 9. In the intermediate expansion form, because the first interface content 11 has moved a certain distance along the first direction, part of the second interface content 12 is already visible. While the content display area continues to increase along the arrow direction, the first interface content 11 will continue to move in the first direction, and then the electronic device will change to the fully expanded form shown in the right image in FIG. 9. In the fully expanded form, the second interface content is already fully visible.

It should be illustrated that FIG. 9 is only an example of an image in the intermediate expansion form. In the process of the content display area increasing, the first interface content can gradually move to the first direction with the increase of the content display area. Correspondingly, the second interface content is also gradually revealed with the gradual movement of the first interface content. In the process of increasing the content display area, there will be multiple intermediate expansion form.

S230, in response to the reduction operation of the content display area, the content display area is reduced, therein in the process of reducing the content display area, the first interface content is moved along a second direction and stacked on the second interface content, so that the second interface content is invisible.

As shown in FIG. 10, if an operation of reducing the content display area is detected in the fully expanded form, the position of the second interface content can be kept unchanged, and the first interface content 11 can be moved along a second direction indicated by the arrow, so that the first interface content 11 can be gradually stacked on the second interface content 12 with the reduction of the content display area. Finally, the second screen content is invisible.

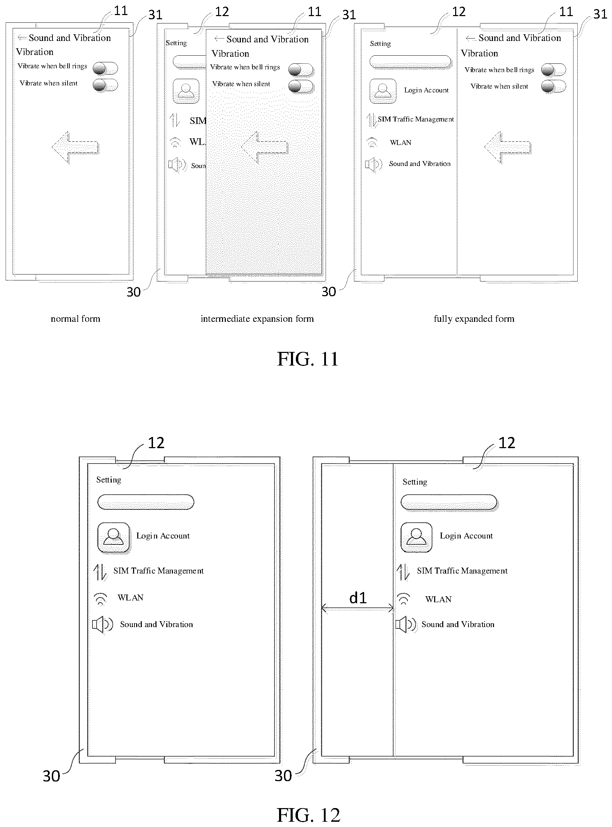

In addition, there are other ways to display the second interface content in embodiments of this disclosure besides the ways shown in FIG. 9 and FIG. 10. As shown in FIG. 11, a first side 30 and a second side 31 of the electronic device are opposite sides. In the way shown in FIG. 11, in the process of increasing the content display area, the content display area is increased along a second direction (that is the direction indicated by the arrow in FIG. 11). Correspondingly, in this way, the second interface content 12 is moved along the second direction, and the second interface content 12 is gradually presented along the second direction starting from a first side of the first interface content 11, and the first side of the first interface content is the side corresponding to the second direction. Optionally, in this way, the position of the first interface content 11 is kept constant with respect to the second side 31 of the electronic device.

It should be illustrated that in the process of increasing the content display area, the position of the second interface content can remain constant relative to the first side of the electronic device. Specifically, in the process of gradually expanding the content display area, one end of the display screen moves with the action of an external force, thus making the originally hidden area in the display screen visible. For example, move in the first direction as shown in FIG. 9. Then in this process, if the position of the second interface content is not kept constant relative to the first side of the electronic device, the second interface content will also move with the movement of the display screen. As an example, as shown in FIG. 12, in the process of increasing the content display area, if the display screen moves by a distance of d1, and if the position of the second interface content is not adjusted, the second interface content will also move by d1 with the movement of the display screen. Then, as a way, the position of the second interface content relative to the first side of the electronic device remains constant, comprising: based on extent of expansion of the content display area, the display position of the second interface content is controlled to move to the first side, so that the position of the second interface content remains constant relative to the first side of the electronic device. Optionally, the extent of expansion of the content display area can be characterized based on velocity and distance. In this case, by obtaining the extent of expansion of the content display area, it is determined that at what time the second interface content should be moved in the opposite direction relative to the direction of the movement of the display screen, so that the second interface content can be visually remained constant relative to the first side 30.

In an embodiment, there are multiple interface content options displayed in the second interface content. After the in response to the increase of the content display area, the second interface content is displayed additionally in the content display area, further comprising: if a selection operation acting on the second interface content is detected, the target interface content option in the second interface content is obtained, and the target interface content option is the interface content option on which the selection operation acting, the first interface content is replaced with the interface content corresponding to the target interface content option.

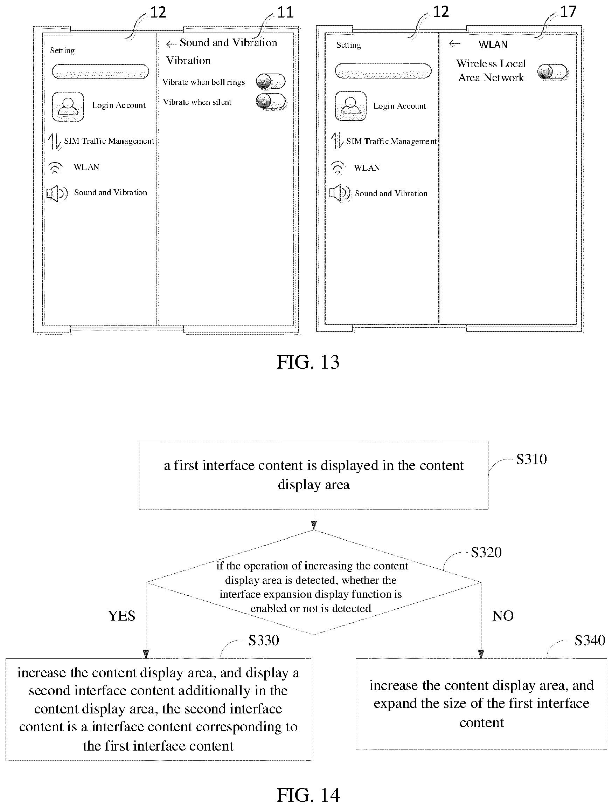

As an example, as shown in FIG. 13, the second interface content 12 includes several interface content options such as SIM card traffic management, WLAN, and sound and vibration. If WLAN is detected as the target interface content option, the original first interface content 11 will be replaced with the corresponding interface content 17 of WLAN.

The method for displaying content provided by the disclosure can make the second interface content be displayed additionally in the content display area with the increase of the content display area after the first interface content has been displayed. Then, the first interface content and the second interface content corresponding to the first interface content can be displayed in the content display area at the same time, which improves the flexibility of interface displaying and improves the user experience. Moreover, in this embodiment, the second interface content can be made visible in the content display area by staggering the first interface content and the second interface content after the first interface content and the second interface content are stacked on top of each other, so as to realize the flexible display of the second interface content. Furthermore, in this embodiment, when both the first interface content and the second interface content are displayed in the content display area, the interface content corresponding to the first interface content can still be switched by operating the second interface content.

Referring to FIG. 14, a method for displaying content provided by the embodiment of this disclosure is applied to an electronic device including a display screen, the size of the content display area of the display screen is adjustable, and the content display area is the visible area in the display area included in the display screen, and the method comprises:
S310, a first interface content is displayed in the content display area.
S320, if the operation of increasing the content display area is detected, whether the interface expansion display function is enabled or not is detected.

Therein, the operation of increasing the content display area can be understood as the first operation in the foregoing embodiment.

It should be illustrated that different users may prefer different ways of displaying interface. To make it easy for different users to choose the ways of displaying interface according to their own preferences, the electronic device is configured with the switch control of interface expansion display function. Through the switch control, the user can choose to enable the interface extension display function, or disable the interface extension display function.

S330, if the interface extension display function is in the enable state, increase the content display area, and display a second interface content additionally in the content display area, the second interface content is a interface content corresponding to the first interface content.

S340, if the interface expansion display function is not in the enable state, increase the content display area, and expand the size of the first interface content.

It should be illustrated that in the case of the interface extension display function in the enable state, in response to the reduction operation of the content display area, the content display area is reduced, and the display of the second interface content is canceled in the content display area. In the case that the interface extension display function is not enabled, the content display area is reduced in response to the reduction operation of the content display area, and the size of the first interface content is restored.

In different scenario, the first interface content will also be different. For example, if the first interface content is video playback content, the length or width of the video playback content will be expanded in the case that the size of the first interface content needs to be expanded. For example, if the first interface content is the content of the setting interface, then in the case of the need to expand the size of the first interface content, the size of the text and picture in the content of the setting interface will be expanded.

The method for displaying content provided by the disclosure can make the second interface content be displayed additionally in the content display area with the increase of the content display area after the first interface content has been displayed. Then, the first interface content and the second interface content corresponding to the first interface content can be displayed in the content display area at the same time, which improves the flexibility of interface displaying and improves the user experience. Moreover, in this embodiment, after the operation of increasing the content display area is detected, whether the interface expansion display function is enabled will be detected, and then different corresponding measures will be taken according to whether the interface expansion display function is enabled, so as to further improve the flexibility and adaptability of the interface displaying.

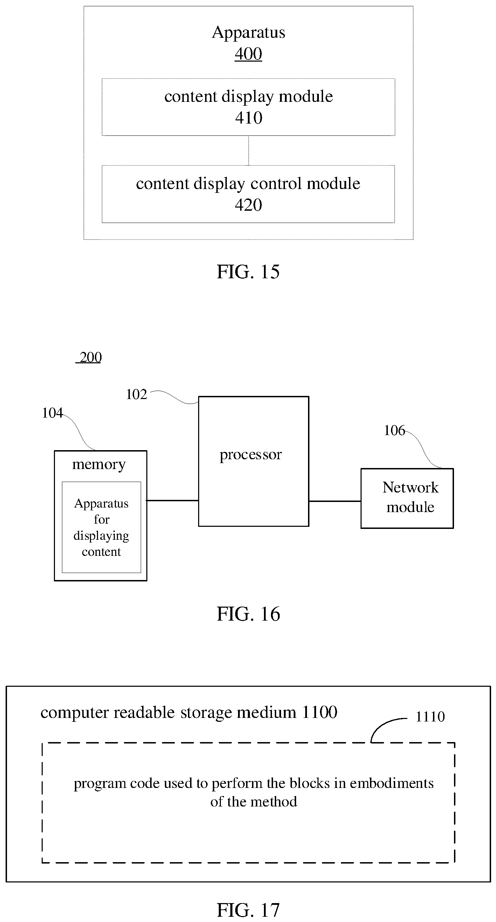

Referring to FIG. 15, an apparatus for displaying content 400 provided in the embodiment of the disclosure, running on an electronic device comprising a display screen, the size of the content display area of the display screen is adjustable, the content display area is the visible area in the display area included in the display screen, the apparatus 400 comprises:
a content display module 410, configured to display a first interface content in the content display area; and
a content display control module 420, configured to display a second interface content additionally in the content display area, in response to the increase of the content display area, the second interface content is an interface content corresponding to the first interface content.

In an embodiment, the content display control module 420 configured to in respond to the increase of the content display area, wherein, in the process of increasing the content display area, the first interface content is stacked above the second interface content, and the first interface content is moved along a first direction and the position of the second interface content remains constant with respect to a first side of the electronic device, so that the second interface content is visible in the content display area, the first side is a side opposite to the first direction.

Optionally, the content display control module 420 configured to control the display position of the second interface content to move to the first side base on the extent of expansion of the content display area, so that the position of the second interface content remains constant with respect to the first side of the electronic device.

In an embodiment, the content display control module 420 configured to increase the content display area and display the second interface content additionally in the content display area, when the operation of increasing the content display area is detected and the first interface content is an interface content at the later level, the second interface content is an interface content at the previous level corresponding to the first interface content. The content display control module 420 further configured to increase the content display area and display a specified content additionally in the content display area, when the operation of increasing the content display area is detected and the first interface content is a first-level interface content.

The content display control module 420 further configured to obtain a target interface content option in the second interface content, when a selection operation acting on the second interface content is detected, the target interface content option is an interface content option which the selection operation acting on, and to replace the first interface content with the interface content corresponding to the target interface content option.

In an embodiment, the content display control module 420 further configured to reduce the content display area and cancel the display of the second interface content in the content display area, in response to the reduction of the content display area. In this embodiment, the content display control module 420 configured to reduce the content display area in response to the reduction of the content display area, wherein in the process of reducing the content display area, remaining the position of the second interface content constant with respect to a first side of the electronic device, and moving the first interface content along a second direction to stack on the second interface content, so that the second interface content is invisible.

Optionally, the content display control module 420 configured to increase, in response to a first operation, the content display area, the first operation is used to instruct the electronic device to control the display screen to increase the content display area.

Therein, the first operation is a specified operation acting on physical control of the electronic device. Optionally, the first operation is a touch operation acting on a first virtual button of the electronic device.

Optionally, the content display control module 420 configured to move the first interface content along a first direction in the process of increasing the content display area, and present the second interface content gradually along the first direction from a first side of the electronic device, the first side is a side opposite the first direction. Therein, the position of the second interface content remains constant with respect to a first side of the electronic device.

In another embodiment, the content display control module 420 configured to move the second interface content along a second direction in the process of increasing the content display area, and present the second interface content gradually along the second direction starting from a first side of the first interface content, the first side of the first interface content is a side corresponding to the second direction. Therein, the position of the first interface content remains constant with respect to a second side of the electronic device.

Optionally, the content display control module 420 configured to detect whether an interface expansion display function is enabled or not if an operation of increasing the content display area is detected, and to increase the content display area and display the second interface content additionally in the content display area if the interface expansion display function is enabled, the second interface content is the interface content corresponding to the first interface content, and to increase the content display area and enlarge the size of the first interface content if the interface expansion display function is not enabled.

Optionally, the content display control module 420 configured to reduce the content display area and cancel the display of the second interface content in the content display area, in response to an operation used to reduce the content display area, in a case that the interface expansion display function is enabled, and to reduce the content display area and restore the size of the first interface content, in response to an operation used to reduce the content display area in a case that the interface expansion display function is not enabled.

The apparatus for displaying content provided by the disclosure, in the case that the size of content display area of display screen is adjustable and the content display area is a visible area in the display area included in the display screen, when the first interface content is displayed in the content display area, in response to the increase of the content display area, the second interface content corresponding to the first interface content is displayed additionally in the content display area. Through the above way, after the first interface content has been displayed, if the content display area is increased, the second interface content can be displayed in the content display area with the increase of the content display area, so that the first interface content and the second interface content corresponding to the first interface content can be displayed in the content display area at the same time. As a result, the flexibility of interface displaying is improved, and the user experience is improved.

It should be illustrated that the embodiments of the apparatus and the aforementioned method in this disclosure are corresponding to each other, and the specific principles in the embodiments of the apparatus can be referred to the contents in the aforementioned embodiments of the method, which will not be repeated here.

In the following, an electronic device provided in this disclosure will be illustrated in combination with FIG. 16.

Refer to FIG. 16, based on the method and apparatus for displaying content mentioned above, the embodiments of this disclosure also provides an electronic device 200 that can perform the method for displaying content mentioned above. The electronic device 200 comprises one or more (only one is shown in the figure) processors 102, memories 104, and network modules 106 coupled to each other. Therein, the memories 104 stores a program that can execute the contents of the foregoing embodiments, and the processors 102 can execute the program stored in the memories 104.

The processor 102 may include one or more cores for processing data. The processor 102 uses various interfaces and lines to connect various parts of the entire electronic device 200, and performs various functions and data processing of the electronic device 200 by running or executing instructions, programs, code sets or instruction sets stored in the memory 104, and calling data stored in the memory 104. Optionally, the processor 102 may be implemented in at least one hardware form of Digital Signal Processing (DSP), Field-Programmable Gate Array (FPGA), Programmable Logic Array (PLA). The processor 102 may integrate one or a combination of Central Processing Unit (CPU), Graphics Processing Unit (GPU), and modem. Therein, the CPU mainly handles the operating system, user interface and application programs. The GPU is responsible for rendering and painting the displayed content. Modems are used to handle wireless communications. It is understood that the above modem can also be implemented by a communication chip alone without integration into the processor 102.

The Memory 104 may include either Random Access Memory (RAM) or Read-Only memory. Memory 104 may be used to store instructions, programs, codes, code sets, or instruction sets. For example, an apparatus for displaying content may be stored in memory 104. The apparatus for displaying content may be the aforementioned apparatus 400. The memory 104 may include a storage program area and a storage data area, wherein the storage program area may store instructions for implementing the operating system, instructions for implementing at least one function (such as touch function, sound play function, image play function, etc.), and instructions for implementing the embodiments of the method, etc. The storage data area can also store the data created by the terminal 100 in use (such as phone book, audio and video data, chat record data).

The network module 106 is used for receiving and transmitting electromagnetic waves to realize the mutual conversion of electromagnetic waves and electrical signals, so as to communicate with communication networks or other equipment, such as communication with audio playback equipment. The network module 106 may include various existing circuit elements for performing these functions, such as antennas, RF transceivers, digital signal processors, encryption/decryption chips, user identity module (SIM) cards, memories, etc. The network module 106 can communicate with various networks such as Internet, enterprise Intranet, wireless network or communicate with other devices through wireless network. Such wireless networks may include cellular telephone networks, wireless local area networks, or metropolitan area networks. For example, the network module 106 can exchange information with the base station.

Refer to FIG. 17, which shows a structural block diagram of a computer readable storage medium provided by an embodiment of the disclosure. The computer readable storage medium 1100 stores program code that can be called by the processor to execute the method described in the embodiments of the method.

The computer readable storage medium 1100 may be electronic memory such as flash memory, EEPROM (electrically erasable programmable read-only memory), EPROM, hard disk, or ROM. Optionally, the computer readable storage medium 1100 includes a non-transitory computer-readable storage medium. The computer readable storage medium 1100 has storage space for the program code 1110 that executes any block in the above method. The program code can be read from or written into one or more computer program products. The program code 1110 can, for example, be compressed in a suitable form.

In summary, a method and apparatus for displaying content, device, electronic device and storage medium provided by the disclosure, in the case that the size of content display area of display screen is adjustable and the content display area is a visible area in the display area included in the display screen, when the first interface content is displayed in the content display area, in response to the increase of the content display area, the second interface content corresponding to the first interface content is displayed additionally in the content display area. Through the above way, after the first interface content has been displayed, if the content display area is increased, the second interface content can be displayed in the content display area with the increase of the content display area, so that the first interface content and the second interface content corresponding to the first interface content can be displayed in the content display area at the same time. As a result, the flexibility of interface displaying is improved, and the user experience is improved.

Finally, it should be illustrated that the above embodiments is only used to illustrate the technical solutions of the disclosure, but not to limit it. Although this disclosure is explained in detail with reference to the aforementioned embodiments, ordinary technicians in the field should understand that they can still modify the technical solutions recorded in the aforementioned embodiments, or equivalently replace some of the technical feature maps. Such modification or replacement shall not make the essence of the corresponding technical solutions deviate from the spirit and scope of the technical solutions of each embodiment of this disclosure.

## Claims

1. A method for displaying content, wherein for an electronic device which includes a display screen, the size of content display area of the display screen is adjustable, the method comprises:
displaying, in the content display area, a first interface content; and
displaying, in response to the increase of the content display area, a second interface content additionally in the content display area, the second interface content is an interface content corresponding to the first interface content.

2. The method of claim 1, wherein the method further comprises:
increasing, in response to a first operation, the content display area, the first operation is used to instruct the electronic device to control the display screen to increase the content display area.

3. The method of claim 2, wherein the first operation is a specified operation acting on physical control of the electronic device.

4. The method of claim 2, wherein the first operation is a touch operation acting on a first virtual button of the electronic device.

5. The method of claim 1, wherein the displaying, in response to the increase of the content display area, a second interface content additionally in the content display area comprises:
moving the first interface content along a first direction in the process of increasing the content display area, and presenting the second interface content gradually along the first direction from a first side of the electronic device, the first side is a side opposite the first direction.

6. The method of any one of claim 1 to 5, wherein the position of the second interface content remains constant with respect to a first side of the electronic device.

7. The method of claim 1, wherein the displaying, in response to the increase of the content display area, a second interface content additionally in the content display area comprises:
moving the second interface content along a second direction in the process of increasing the content display area, and presenting the second interface content gradually along the second direction starting from a first side of the first interface content, the first side of the first interface content is a side corresponding to the second direction.

8. The method of any one of claim 1 to 7, wherein the position of the first interface content remains constant with respect to a second side of the electronic device.

9. The method of claim 1, wherein the displaying, in response to the increase of the content display area, a second interface content additionally in the content display area comprises:
increasing the content display area and displaying the second interface content additionally in the content display area, when the operation of increasing the content display area is detected and the first interface content is an interface content at the later level.

10. The method of claim 9, wherein the method further comprises:
increasing the content display area and displaying a specified content additionally in the content display area, when the operation of increasing the content display area is detected and the first interface content is a first-level interface content.

11. The method of claim 9, wherein there are multiple interface content options displayed in the second interface content, after the displaying, in response to the increase of the content display area, a second interface content additionally in the content display area, the method further comprises:
obtaining a target interface content option in the second interface content, when a selection operation acting on the second interface content is detected, the target interface content option is an interface content option which the selection operation acting on;
replacing the first interface content with the interface content corresponding to the target interface content option.

12. The method of claim 1, wherein after the displaying, in response to the increase of the content display area, a second interface content additionally in the content display area, the method further comprises:
reducing the content display area and canceling the display of the second interface content in the content display area, in response to the reduction of the content display area.

13. The method of claim 12, wherein the reducing the content display area and canceling the display of the second interface content in the content display area, in response to the reduction of the content display area comprises:
reducing the content display area in response to the reduction of the content display area;
wherein in the process of reducing the content display area, remaining the position of the second interface content constant with respect to a first side of the electronic device, and moving the first interface content along a second direction to stack on the second interface content, so that the second interface content is invisible.

14. The method of claim 13, wherein the remaining the position of the second interface content constant with respect to a first side of the electronic device comprises:
controlling the display position of the second interface content to move to the first side base on the extent of expansion of the content display area, so that the position of the second interface content remains constant with respect to the first side of the electronic device.

15. The method of any one of claim 1 to 14, wherein after the displaying, in the content display area, a first interface content, the method further comprises:
detecting whether an interface expansion display function is enabled or not, if an operation of increasing the content display area is detected;
the displaying, in response to the increase of the content display area, a second interface content additionally in the content display area, the second interface content is an interface content corresponding to the first interface content comprises:
increasing the content display area and displaying the second interface content additionally in the content display area if the interface expansion display function is enabled, the second interface content is the interface content corresponding to the first interface content;
increasing the content display area and enlarging the size of the first interface content if the interface expansion display function is not enabled.

16. The method of claim 15, wherein the method further comprises:
in a case that the interface expansion display function is enabled, reducing the content display area and canceling the display of the second interface content in the content display area, in response to an operation used to reduce the content display area;
in a case that the interface expansion display function is not enabled, reducing the content display area and restoring the size of the first interface content, in response to an operation used to reduce the content display area.

17. The method of any one of claim 1 to 16, wherein the second interface content is an interface content at the previous level corresponding to the first interface content.

18. An apparatus for displaying content, wherein for an electronic device which includes a display screen, the size of content display area of the display screen is adjustable, the apparatus comprises:
a content display module configured to display a first interface content in the content display area; and
a content display control module configured to display a second interface content additionally in the content display area, in response to the increase of the content display area, the second interface content is an interface content corresponding to the first interface content.

19. An electronic device, wherein comprising a processor and a memory, one or more programs being stored in the memory and configured to be executed by the processor to implement any one of the methods of claims 1-17.

20. A computer-readable storage medium, wherein the computer-readable storage medium stores computer programs code, any one of the methods of claims 1-17 being implemented when the computer programs code being run by processor.
